Europäisches Patentamt

(19) European Patent Office

Office européen des brevets

(11) Numéro de publication: **0 027 487**

**A1**

## (12) DEMANDE DE BREVET EUROPEEN

(21) Numéro de dépôt: **79870025.8**

(22) Date de dépôt: **18.10.79**

(51) Int. Cl.³: **B 29 J 5/00**

(30) Priorité: **10.10.79 BE 197573**

(43) Date de publication de la demande:
**29.04.81 Bulletin 81/17**

(84) Etats Contractants Désignés:
**AT BE CH DE FR GB IT LU NL SE**

(71) Demandeur: **Verbestel, Jean-Baptiste**
**Van Maerlant straat, 4**
**B-8500 Kortrijk(BE)**

(72) Inventeur: **Verbestel, Jean-Baptiste**
**Van Maerlant straat, 4**
**. B-8500 Kortrijk(BE)**

(74) Mandataire: **Kuborn, Jacques et al,**
**Office Hanssens S.P.R.L. Square Marie-Louise, 40 (bte 19)**
**B-1040 Bruxelles(BE)**

(54) Procédé et dispositif de traitement de matériaux lignocellulosiques liés à l'aide de résines à base de formaldéhyde.

㊗ Dans un procédé de traitement de matériaux lignocellulosiques, liés à l'aide de résines à base de formaldéhyde, au cours duquel la teneur en formaldéhyde a été réduite par réaction avec l'ammoniac, les matériaux sont soumis, après traitement à l'ammoniac, à une ventilation favorisant essentiellement la désorption de l'ammoniac contenu dans les couches superficielles des matériaux, et ensuite à une neutralisation de l'ammoniac libre restant dans les matériaux par absorption d'un acide faible sous forme de gaz et formation "in situ" d'un sel d'ammonium non volatil; le dispositif pour l'application de ce procédé comporte, outre une chambre de traitement à l'ammoniac (2), une chambre (4) de désorption par ventilation et une chambre (5) de neutralisation à l'acide.

EP 0 027 487 A1

./...

FIG. 1

1.

La présente invention a pour objet un procédé de traitement de matériaux lignocellulosiques liés à l'aide de résines à base de formaldéhyde, et notamment de matériaux en forme de panneaux tels que panneaux de particules, contre-plaqués, lattés, etc., dans lesquels la teneur en formaldéhyde a été réduite par réaction avec l'ammoniac, permettant d'en éliminer de manière définitive tout dégagement gazeux nocif ou gênant. L'invention a également pour objet le dispositif permettant la réalisation de ce procédé.

Il est connu de longue date que ce type de matériaux, dans lequel il est fait usage de liants de type urée-formol, mélamine-formol, phénol-formol ou d'autres liants à base de formol, donne lieu à une émanation de gaz formaldéhyde qui peut se poursuivre longtemps après la fabrication du panneau, et rend l'air ambiant plus ou moins toxique.

La recherche pour l'amélioration des conditions de vie a amené les instances officielles à décréter des règlements concernant des limites des teneurs en formaldéhyde de ces matériaux et, notamment de panneaux, en vue de supprimer les émanations de formaldéhyde dans l'air ambiant. Alors qu'il est courant d'employer des panneaux de particules de bois et d'autres matières cellulosiques dont la teneur en formaldéhyde est de plus de 50 mg/100 g, les nouvelles mesures imposeront que la teneur en formaldéhyde soit inférieure à 50 mg/100 g et même, dans certains pays, inférieure à 10 mg/100 g de panneaux.

Certaines mesures pour réduire la teneur en formaldéhyde du panneau ont été prises en agissant par voie chimique sur la composition des liants. Quelques unes des compositions ont une action favorable, permanente dans certains cas, labile dans d'autres cas. On observe en général que ce résultat est obtenu au détriment de la propriété de collage de ces liants.

On a également déjà proposé des procédés industriels exploitant la réaction connue de l'ammoniac sur le formaldéhyde pour former de l'hexaméthylèneamine. Cette réaction est irréversible dans les conditions normales d'utilisation du panneau (absence d'acide fort) et le produit obtenu est un corps stable se sublimant seulement aux envi-

2.

rons de 280°C. Ces procédés permettent la réalisation de panneaux à l'aide de liants conventionnels, et n'influent donc pas sur les propriétés de collage des liants.

De tels procédés, et les dispositifs permettant leur réalisation, ont déjà fait l'objet notamment du brevet belge 863.579, suivant lequel l'ammoniac est amené à circuler dans une chambre autour des plaques et est absorbé par celles-ci. Un autre procédé, révélé par la publication allemande DE OS 28 04 514, consiste à faire circuler l'ammoniac au travers de la plaque en créant une dépression sur une face de celle-ci.

Dans ces procédés connus, les plaques traitées conservent une certaine quantité d'ammoniac en excès. Une partie de cet ammoniac n'ayant pas réagi avec le formaldéhyde semble s'associer au bois, suivant des phénomènes chimiques complexes et mal connus. Une autre partie de l'ammoniac subsiste dans la plaque à l'état libre, et se dégage de celle-ci en dehors de la chambre de traitement. Ceci provoque une pollution inadmissible des lieux de travail, et rend les procédés décrits ci-dessus difficilement applicables; par la suite, le dégagement d'ammoniac peut dans une certaine mesure rester gênant, puisqu'il suffit de la présence dans l'air de proportions très réduites d'ammoniac pour que celui-ci se détecte à l'odorat.

Des mesures effectuées dans l'atmosphère à la sortie de la chambre de traitement révélée au brevet belge 863.579 ont donné les résultats suivants, compte tenu que les panneaux traités sont empilés en paquets.

- à 2 m. des panneaux                                20 ppm $NH_3$
- entre les paquets                                  450 ppm
- au-dessus d'un paquet 20 min.
  après traitement                                   80 ppm.

Ces valeurs se situent bien au-dessus de la limite détectable à l'odorat et même bien au delà des valeurs permises sur les lieux de travail, et le dégagement d'ammoniac se poursuit pendant plusieurs jours.

3.

L'on pourrait bien entendu songer à éliminer l'ammoniac en excès à l'aide d'une ventilation énergique des panneaux après traitement.

Une telle solution n'apporte cependant pas de résultats satisfaisants, ainsi qu'il apparaît du graphique en figure 9 qui donne, en fonction du temps, les courbes d'absorption de l'ammoniac au cours de la première phase de traitement et de désorption au cours d'une étape de ventilation à l'air subséquente. Ce graphique sera étudié de manière plus approfondie par la suite. Par ailleurs, il n'est pas souhaitable que la totalité de l'ammoniac n'ayant pas réagi avec le formaldéhyde, ou ne s'étant pas associé au bois, puisse quitter le panneau. En effet, le formaldéhyde neutralisé par l'ammoniac, est le formaldéhyde en excès, qui n'est pas entré dans la constitution du liant lors de la formation du panneau. Il s'est toutefois avéré que le liant lui-même peut à la longue libérer du formaldéhyde. Dès lors, il est intéressant de conserver dans le panneau de l'ammoniac sous une forme réactive, pouvant assurer la neutralisation continue du formol naissant.

Le formaldéhyde et le bois forment un système complexe. Le phénomène de sorption est à la base de la fixation de formaldéhyde.

La structure chimique morphologique du bois et plus particulièrement l'organisation des différentes parois cellulaires postulent que pour les réactions concernant les composés incorporés dans le bois un accès suffisant soit ménagé aux parois cellulaires et à leurs constituants moléculaires.

Ceci est réalisé, dans le cas de la neutralisation du formaldéhyde présent dans un panneau de particules lignocellulosiques agglomérées, à l'aide d'un gaz tel que l'ammoniac (brevet belge 863.579). En effet, l'ammoniac pénétrant dans le panneau par sorption ne produit pas de gonflement des cellules et n'obstrue pas les accès.

L'on pourrait songer à neutraliser de la même manière l'excès d'ammoniac dans le panneau, après traitement, par absorption d'un acide sous forme gazeuse ou sous forme

4.

d'aérosols. Une telle solution permettrait la constitution "in situ" d'une réserve d'ammonium, sous forme de sel, suffisante pour assurer la neutralisation continue du formol naissant, sans que se produise de dégagement d'ammoniac. Toutefois, les sels d'ammonium ainsi formés sont volumineux et ceux formés dans les zones proches de la surface réduisent l'accès aux parois cellulaires dans le panneau. De la sorte, la neutralisation de l'ammoniac par l'acide, sous forme de sel, ne peut être réalisée de manière satisfaisante dans toute l'épaisseur du panneau.

Le procédé suivant l'invention apporte une solution à ce problème en prévoyant de soumettre les matériaux lignocellulosiques, notamment en forme de panneaux, traités à l'ammoniac, d'abord à une ventilation énergique, afin de réduire la teneur en amoniac des zones des matériaux proches de la surface, et de n eutraliser ensuite l'amoniac libre restant dans les dits matériaux par absorption d'un acide faible sous forme d'un gaz proprement dit ou d'un aérosol, ces deux termes étant regroupés ci-après sous l'appellation générale "gaz". L'acide choisi ne peut en effet être un acide fort, et son action acide sur les matériaux ne peut être trop prolongée, afin de ne pas provoquer la décomposition de l'hexaméthylène amine formé lors de l'étape précédente.

L'invention sera mieux comprise en se reportant à la description en même temps qu'au dessin annexé qui représente, uniquement à titre d'exemple, divers modes de réalisation de l'invention, et dans lequel :

- la Figure 1 est une vue schématique en élévation et en coupe d'un mode de réalisation d'un dispositif permettant l'application du procédé suivant l'invention,

- la Figure 2 est un graphique donnant l'allure de la répartition des pressions dans le dispositif de la figure 1,

- les Figures 3 à 6 représentent schématiquement divers autres modes de réalisation de dispositifs permettant l'application du procédé suivant l'invention,

- la Figure 7 est un graphique donnant l'allure de la concentration en ammoniac absorbé, dans l'épaisseur du panneau, à la fin de l'étape d'absorption,

- la Figure 8 est un graphique donnant l'allure de la concentration en ammoniac libre subsistant dans l'épaisseur du panneau, à la fin de l'étape de désorption,

- la Figure 9 est un graphique donnant les courbes d'absorption d'ammoniac par un panneau de particules séjournant dans un courant d'ammoniac et de désorption ultérieure de l'ammoniac sous l'effet d'une ventilation à l'air.

En se reportant plus particulièrement au graphique de la figure 9, qui donne le résultat de mesures effectuées sur un échantillon de panneau de 20 mm d'épaisseur, d'un poids spécifique de 700 kg/m$^3$ et d'un poids total de 250 g, l'on constate qu'une grande quantité d'ammoniac excédentaire demeure dans le panneau, même après une phase de désorption d'ammoniac sous l'effet d'une ventilation à l'air.

En effet, les diverses familles de courbes I, II et III indiquent pour des concentrations en ammoniac de l'atmosphère de traitement des panneaux de respectivement 3,5 - 9,3 et 16,6 % en volume, et en fonction du temps, respectivement la quantité d'ammoniac fournie à la chambre de traitement (indice f), la quantité d'ammoniac absorbée par le panneau (indice a), et la quantité d'ammoniac subsistant dans le panneau au cours de la ventilation (indice d).

La quantité d'ammoniac strictement nécessaire à la neutralisation du formaldéhyde libre est représentée dans ce graphique par la constante N.

En se reportant à la figure 7, on constate que la quantité d'ammoniac absorbée dans le panneau décroît de la surface du panneau jusqu'au centre, et que les différences d'absorption entre la surface du panneau et le centre sont d'autant plus importantes que le temps de séjour du panneau dans l'atmosphère chargée d'ammoniac est plus court et/ou que la teneur en ammoniac de l'atmosphère est moindre. En effet, les courbes b et c donnent l'allure instantanée de la répartition de l'ammoniac dans l'épaisseur d'un panneau après traitement à l'ammoniac, la courbe c étant relative à un temps de traitement moindre et/ou une concentration en ammoniac de l'atmosphère moindre que dans le cas représenté par la courbe b. Bien entendu, en laissant ensuite reposer le panneau, la répartition de l'ammoniac a tendance à s'uniformiser dans toute l'épaisseur du panneau.

6.

Si l'on considère que pour obtenir rapidement au coeur du panneau une neutralisation complète du formaldéhyde, il est nécessaire de fournir une quantité complémentaire d'ammoniac qui s'allie à la cellulose, un excès d'ammoniac est inévitable au moins dans les couches du panneau proches de la surface par où pénètre l'ammoniac, excès d'autant plus important que le temps de traitement doit être réduit.

Suivant l'invention, après le traitement à l'ammoniac, on soumet les panneaux à une ventilation énergique. Les courbes Id, IId et IIId de la figure 9 donnent l'évolution de la teneur en ammoniac des panneaux au cours de la ventilation.

L'allure de ces courbes peut s'expliquer par le fait que la teneur en ammoniac des zones du panneau proches de la surface, dans lesquelles la teneur en ammoniac est la plus élevée ainsi qu'on le voit à la figure 7, diminue très rapidement, alors que les zones proches du coeur du panneau ne subissent que très lentement l'influence de cette ventilation.

On peut admettre qu'après les premières minutes de désorption de l'ammoniac sous l'effet de la ventilation, l'allure générale de la répartition de l'ammoniac libre dans l'épaisseur du panneau s'établit de la manière représentée en figure 8. Ici encore il s'agit d'une allure instantanée de la répartition de l'ammoniac dans le panneau.

Une étape suivante de l'invention consiste, à l'issue de cette désorption, à neutraliser l'ammoniac par l'action d'un acide faible sous forme de gaz ou d'aérosol. De la sorte, il se forme peu de sel d'ammonium dans les zones de la plaque proches de la surface, ce qui permet la pénétration de l'acide jusqu'au centre de la plaque, en vue de la neutralisation de l'ammoniac et la formation "in situ" d'un sel d'ammonium, non volatil , demeurant dans la plaque et constituant une réserve en vue de la neutralisation continue du formol naissant.

L'exemple ci-après donne à simple titre indicatif un mode de réalisation pratique du procédé de l'invention, appliqué à un panneau dont les caractéristiques sont les suivantes :

Poids spécifique : 700 kg/m$^3$

liant : résine urée-formol

épaisseur : 22 mm.

teneur en formaldéhyde libre : 0,030 % (30 mg/100 g).

Ce panneau est d'abord traité de manière connue à l'ammoniac dans les conditions suivantes :

concentration en ammoniac de l'atmosphère : 8 %

durée du traitement : 2 min. 30 sec.

température ambiante : 22°C.

Pendant le séjour du panneau dans la chambre de traitement à l'ammoniac, l'atmosphère venant au contact de celui-ci est continuellement renouvelée par brassage.

La quantité d'ammoniac absorbée dans le panneau est de 90 mg/100 g de panneau, ce qui représente un excès d'ammoniac de 80 mg/100 g du panneau par rapport à la quantité strictement nécessaire pour la neutralisation du formaldéhyde libre dans le panneau. Le panneau ainsi traité est ensuite amené suivant l'invention dans une seconde chambre, où il est soumis à l'action d'un courant d'air circulant à une vitesse de 1 m/min., pendant une durée de 2 minutes. L'on extrait ainsi du panneau, par désorption, 31 mg d'ammoniac/ 100 g de panneau, de sorte qu'il reste dans le panneau 49 mg d'ammoniac résiduel/ 100 g de panneau. Après cette phase de désorption, le panneau est amené dans une troisième chambre où il est soumis à l'action d'une solution gazeuse d'acide formique à une concentration de 70 mg d'acide formique par litre d'air, pendant un temps de 2 min. 30 sec. L'échantillon ainsi traité est ensuite analysé et examiné, et présente les caractéristiques suivantes :

- teneur en formaldéhyde libre : 0,007 %

- réaction légèrement acide

- odeur persistante : aucune

- épaisseur finale : inchangée

- consommation NH$_3$ : 59 mg/100 g de panneau (31 mg récupérés par désorption)

- consommation acide formique : 50 mg/100 g panneau.

En théorie, pour neutraliser les 49 mg/100 g de panneau d'ammoniac résiduel, il serait nécessaire d'utiliser 132 mg d'acide formique par 100 g de panneau. La différence entre cette valeur théorique et la valeur observée s'explique par le fait qu'une partie de l'ammoniac absorbé s'allie au bois et n'est pas réactif.

Les conditions optimales de traitement des panneaux suivant l'invention, après absorption d'ammoniac, varieront bien sûr en fonction des caractéristiques du panneau traité.

Les principales caractéristiques du panneau influençant le traitement sont les suivantes :

- nature des particules : bois, lin, etc.
- structure : fermée, poreuse, à couches multiples...
- épaisseur
- poids spécifique
- teneur en formaldéhyde libre
- teneur en formaldéhyde à atteindre après traitement
- température du panneau.

Pour optimaliser le traitement, l'on peut agir sur différents facteurs qui sont, entre autres :

- concentration en ammoniac dans la chambre de traitement à l'ammoniac,
- quantité d'air fournie au cours de l'étape de désorption (vitesse du courant d'air)
- concentration en acide de l'atmosphère utilisée au cours de la phase de neutralisation de l'ammoniac,
- temps de séjour du panneau dans les diverses chambres de traitement.

Des modes de réalisation préférés du dispositif suivant l'invention comportent des moyens permettant d'agir sur ces facteurs, de façon à permettre, dans un même dispositif, de traiter des panneaux de caractéristiques différentes.

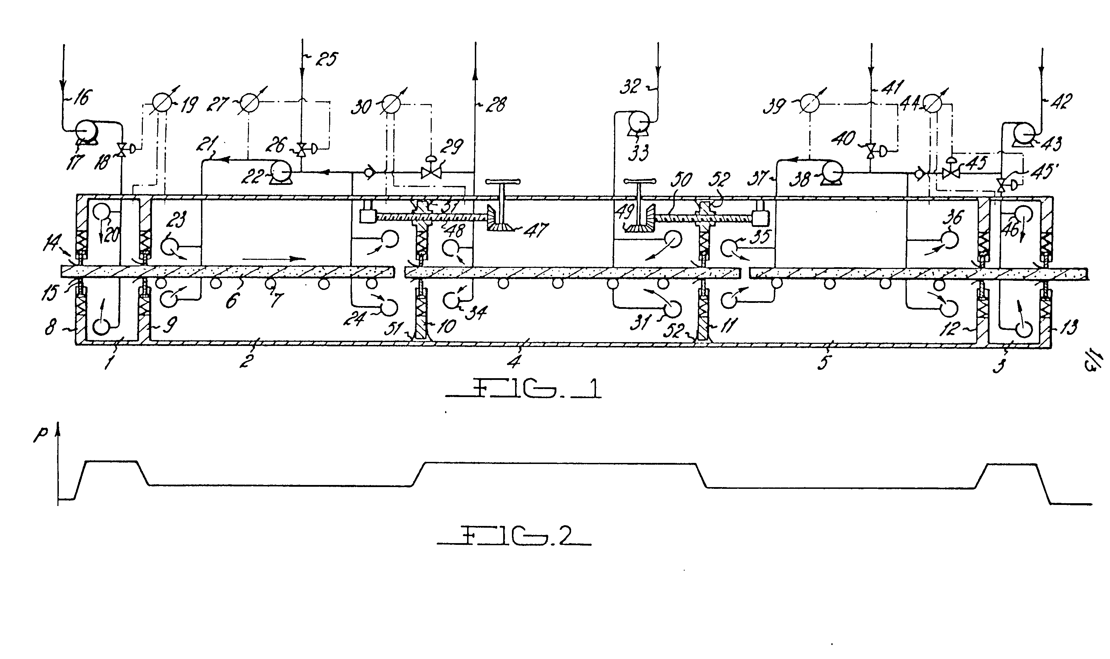

Un mode de réalisation préféré de l'invention, appliqué à un dispositif de traitement continu de panneaux, d'une capacité de production d'environ 150 m$^3$ par jour, est représenté de manière détaillée en figure 1.

Suivant ce mode de réalisation, le dispositif comporte de manière connue un sas d'entrée 1, une chambre de traitement à l'ammoniac 2 et un sas de sortie 3. Suivant l'invention, une chambre 4 de ventilation et une chambre 5 de neutralisation à l'acide ont été insérées entre la chambre 2 et le sas de sortie 3.

Les panneaux de particules 6 sont acheminés au travers du dispositif par un transporteur 7; les parois 8, 9, 10, 11, 12 et 13 séparant les diverses chambres et sas entre eux et de l'extérieur sont pourvus d'ouvertures 14 pour le passage des panneaux, dans lesquelles agissent des dispositifs d'étanchéité et de guidage 15 constamment appliqués contre les panneaux 6; des dispositifs d'étanchéité similaires, non représentés au dessin, sont également prévus pour assurer l'étanchéité latéralement, sur la tranche des panneaux.

La figure 2 donne l'allure de la répartition des pressions dans les diverses parties du dispositif. Afin d'éviter toute pollution des lieux de travail, les sas 1 et 3 sont maintenus en surpresion par rapport aux chambres de traitement à l'ammoniac 2 et à l'acide 4; de même, afin d'assurer une bonne ventilation des panneaux, la chambre de ventilation 4 est également maintenue en surpression par rapport aux chambres 2 et 5.

De l'air est amené au sas 1 par l'intermédiaire d'un conduit 16 et d'un ventilateur 17; une vanne 18 commande le passage dans le conduit 16, à partir des informations qui lui sont fournies par un dispositif sensible à la pression 19 interposé entre le sas 1 et la chambre 2. Cet air est introduit dans le sas 1 par des distributeurs 20.

Dans la chambre 2, un mélange d'air et d'ammoniac est mis en circulation, au contact des panneaux 6, par l'intermédiaire d'un conduit 21 et d'un ventilateur 22, entre des distributeurs 23 et des collecteurs 24; l'alimentation du mélange en ammoniac est assurée par un conduit 25 et est commandée par une vanne 26 en fonction de la teneur en ammoniac de l'atmosphère circulant dans le conduit 21, teneur détectée par un dispositif de mesure 27. De la même manière, le conduit 21 est alimenté en un mélange air-ammoniac au départ d'un conduit 28, par l'intermédiaire d'une vanne 29 commandée par un dispositif 30 sensible à la différence de pression régnant entre la chambre 2 et la chambre 4. Dans cette chambre 4, de l'air est amené au contact des panneaux par l'intermédiaire de distributeurs 31 à partir d'un circuit comprenant un conduit 32 et un ventilateur 33, et le mélange - air/ammoniac désorbé des panneaux - est évacué par les collecteurs 34 et le conduit 28. Une partie de ce mélange air-ammoniac est envoyé dans la chambre 2, comme dit plus haut. La partie restante sera envoyée vers un dispositif de purification et/ou de récupération de l'ammoniac.

Enfin, dans la chambre 5, un mélange d'acide formique et d'air est amené à circuler au contact des panneaux, entre des distributeurs 35 et des collecteurs 36, la circulation de ce mélange étant assurée par l'intermédiaire d'un conduit 37 et d'un ventilateur 38. La teneur en acide dans le conduit 37 est surveillée par un dispositif de mesure 39 qui commande une vanne 40 en vue de permettre l'apport d'une quantité supplémentaire d'acide par un conduit d'alimentation 41. De même, de l'air peut être fourni à cette chambre 5 à partir d'un conduit 42 dans lequel agit un ventilateur 43, un dispositif 44 sensible à la différence de pression entre la chambre 5 et le sas 3 commandant respectivement une vanne 45 pour l'apport d'air au conduit 37 et une vanne 45' pour l'apport d'air au sas 3, dans lequel il est introduit par des distributeurs 46.

Etant donné que pour, un même type de panneau, des temps de traitement différents peuvent être requis en fonction notamment de la température du panneau à son entrée dans le dispositif, ou encore de la concentration en ammoniac de l'atmosphère dans la chambre 2 de traitement à l'ammoniac, les parois 10 et 11, qui conditionnent les dimensions relatives des chambres 2, 4 et 5, ont été rendues mobiles dans le mode de réalisation préféré de l'invention représenté en figure 1. Ceci est matérialisé par une commande à pignon et vis 47, 48 en engagement avec la paroi 10 et une commande 49, 50 en engagement avec la paroi 11. L'étanchéité entre les chambres est assurée par des joints d'étanchéité schématiquement représentés en 51 pour la paroi 10 et en 52 pour la paroi 11.

11.

La figure 3 représente de manière très schématique un autre mode de réalisation d'un dispositif suivant l'invention, de plus grande capacité de production que le dispositif représenté en figure 1, et dans lequel les panneaux 6 se déplacent en position verticale depuis un sas d'entrée 53, au travers d'une chambre de traitement à l'ammoniac 54, d'une chambre de ventilation 55 et d'une chambre de neutralisation à l'acide 56 jusqu'à un sas de sortie 57.

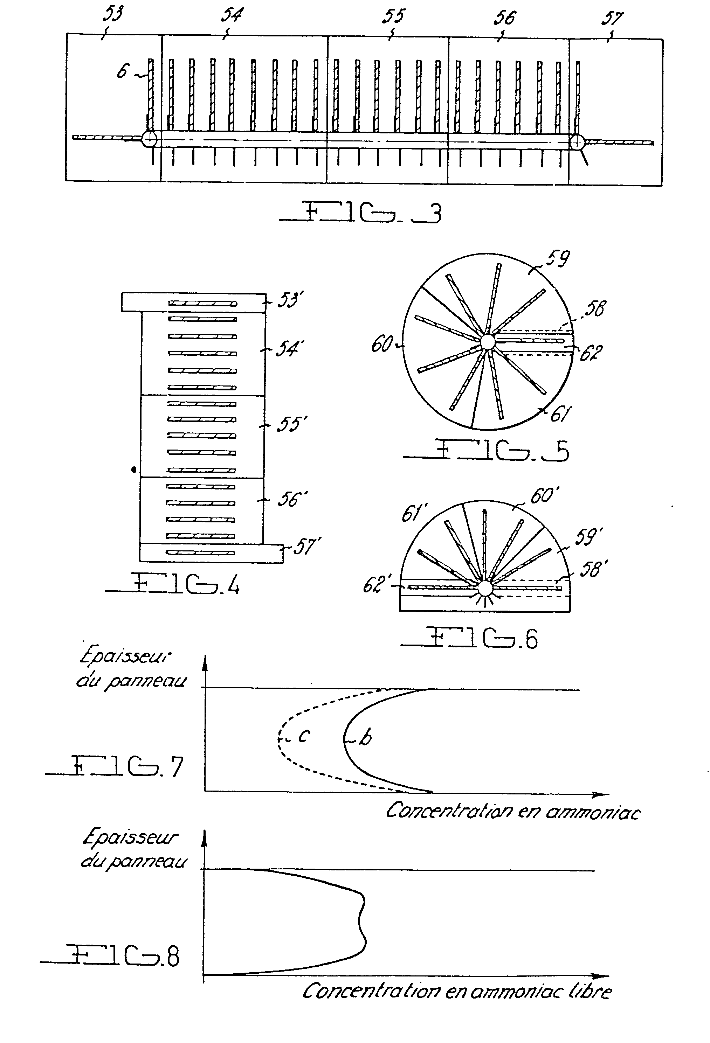

De même, la figure 4 représente de manière très schématique un mode de réalisation d'un dispositif suivant l'invention, dans lequel les panneaux se déplacent verticalement, alors qu'ils sont en position horizontale. Ce dispositif présente également un sas d'entrée 53', des chambres de traitement à l'ammoniac 54', de ventilation 55' et de neutralisation à l'acide 56', ainsi qu'un sas de sortie 57'.

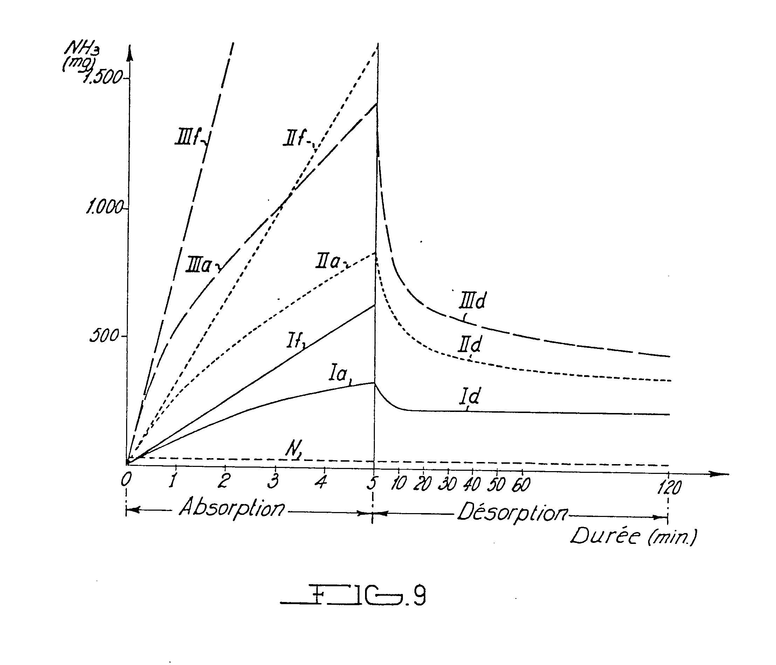

Les figures 5 et 6 montrent très schématiquement d'autres modes de réalisation dans lesquels les panneaux se déplacent par pivotement autour d'un axe central. Le dispositif de la figure 5 entraîne les panneaux sur un parcours proche de 360°, au travers d'un sans d'entrée 58, de chambres de traitement à l'ammoniac 59, de ventilation 60 et de neutralisation 61, pour aboutir au sas de sortie 62, alors que des éléments correspondants 58', 59', 60', 61' et 62' du dispositif de la figure 6 réalisent le même traitement des panneaux sur un parcours de 180°.

Il va de soi qu'il est également possible de concevoir d'autres modes de réalisation du dispositif de l'invention dans lesquels les diverses chambres sont conçues sous forme d'éléments séparés.

De même, bien que l'invention ait été décrite en regard d'applications concernant le traitement de panneaux plans de matières lignocellulosiques, il est évident qu'elle s'applique au traitement de tous types de matériaux lignocellulosiques liés à l'aide de résines à base de formaldéhyde, et notamment à des matériaux non plans tels que panneaux ondulés et à des meubles et analogues en matériaux lignocellulosiques, dont l'assemblage est réalisé à l'aide des résines prémentionnées.

0027487

1.

REVENDICATIONS.

1. Procédé de traitement de matériaux lignocellulosiques liés à l'aide de résines à base de formaldéhyde, dans lesquels la teneur en formaldéhyde a été réduite par absorption d'ammoniac, caractérisé en ce que, après le traitement à l'ammoniac, les matériaux sont soumis à une ventilation favorisant essentiellement la désorption de l'excès · d'ammoniac contenu dans les couches superficielles des dits matériaux, et en ce que l'ammoniac libre restant dans les matériaux est ensuite neutralisé par absorption, dans les matériaux, d'un acide faible sous forme de gaz, en vue de former "in situ" un sel d'ammonium non volatil.

2. Procédé suivant 1, caractérisé en ce que l'acide faible utilisé pour la neutralisation de l'ammoniac libre restant dans les matériaux est l'acide formique.

3. Dispositif pour la réalisation du procédé suivant 1 et 2, comprenant une chambre d'imprégnation à l'aide d'ammoniac de matériaux lignocellulosiques liés à l'aide de résines à base de formol, caractérisé en ce qu'il comprend en outre une chambre de désorption, constamment alimentée en air frais, dans laquelle sont prévus des moyens pour balayer la surface des matériaux à l'aide de ce courant d'air frais et pour évacuer l'air chargé en ammoniac, et une chambre de neutralisation alimentée en acide faible, dans laquelle sont prévus des moyens pour entretenir au voisinage des matériaux une atmosphère chargée en acide, des moyens étant en outre prévus pour transporter les matériaux de la chambre d'imprégnation à l'ammoniac à la chambre de désorption et de la chambre de désorption à la chambre de neutralisation.

4. Dispositif suivant 3, pour le traitement de panneaux de matières lignocellulosiques liées à l'aide de résines à base de formaldéhyde, dans lequel la chambre de traitement à l'ammoniac est disposée entre un sas d'entrée et un sas de sortie et est traversée par un dispositif de transport continu des panneaux, caractérisé en ce que la chambre de désorption et la chambre de neutralisation sont interposées entre la chambre de traitement à l'ammoniac et le sas de sortie, l'ensemble étant constitué sous forme d'un dispositif unique dans lequel les divers sas et chambres sont séparés entre eux par des parois, alors que le dispositif de transport continu de panneaux s'étend au moins du sas
d'entrée au sas de sortie, au travers des diverses chambres.

5. Dispositif suivant 4, caractérisé en ce que les parois de séparation entre la chambre de traitement à l'ammoniac et la chambre de désorption, ainsi qu'entre la chambre de désorption et la chambre de neutralisation, sont déplaçables pour modifier les dimensions relatives de ces diverses chambres.

FIG.1

FIG.2

FIG. 3

FIG.4

FIG.5

FIG.6

Epaisseur du panneau

FIG.7

Concentration en ammoniac

Epaisseur du panneau

FIG.8

Concentration en ammoniac libre

FIG.9

# 0027487

## DOCUMENTS CONSIDERES COMME PERTINENTS

| Categorie | Citation du document avec indication, en cas de besoin, des parties pertinentes | Revendication concernée |
|---|---|---|
| D | <u>BE - A - 863 579</u> (N.V. VERKOR)<br>* revendications 1 à 14 *<br>& DE - A1 - 2 903 254 | 1,3 |
| D | <u>DE - A1 - 2 804 514</u> (RY AB)<br>* revendications 1 à 6 *<br>& FR - A1 - 2 379 374<br><br>-- | 1,3 |
| A | <u>EP - A1 - 0 001 237</u> (BASF AG)<br>* revendications 1 à 4 *<br><br>---- | |

**CLASSEMENT DE LA DEMANDE (Int. Cl.3)**

B 29 J     5/00

**DOMAINES TECHNIQUES RECHERCHES (Int. Cl.3)**

B 29 J     5/00

C 08 G     12/00

C 08 G     85/00

C 08 L     97/02

**CATEGORIE DES DOCUMENTS CITES**

X: particulierement pertinent

A: arrière-plan technologique

O: divulgation non-ecrite

P: document intercalaire

T: theorie ou principe à la base de l'invention

E: demande faisant interference

D: document cite dans la demande

L: document cite pour d'autres raisons

&: membre de la même famille, document correspondant

X | Le present rapport de recherche a ete etabli pour toutes les revendications

| Lieu de la recherche | Date d'achevement de la recherche | Examinateur |
|---|---|---|
| Berlin | 23-01-1981 | BITTNER |

OEB Form 1503.1  06.78